# EUROPÄISCHE PATENTSCHRIFT

(11) **EP 1 179 142 B1**
(45) Veröffentlichungstag und Bekanntmachung des Hinweises auf die Patenterteilung: **01.06.2005**
(21) Anmeldenummer: 00916841.0
(22) Anmeldetag: 17.02.2000
(51) Int. Cl.: F15B 15/19, F15B 15/26, B60R 21/13, F42B 3/182

(54) **PYROTECHNISCHER AKTUATOR**
PYROTECHNIC ACTUATOR
ACTIONNEUR PYROTECHNIQUE

(30) Priorität: 18.05.1999 DE 19922671
(43) Veröffentlichungstag der Anmeldung: 13.02.2002
(73) Patentinhaber: Cönen, Götz, 40668 Meerbusch (DE)
(72) Erfinder: Cönen, Götz, 40668 Meerbusch (DE)
(74) Vertreter: LENZING GERBER
(86) Internationale Anmeldenummer: PCT/EP2000/001281
(87) Internationale Veröffentlichungsnummer: WO 2000/070231

(56) Entgegenhaltungen:
- EP-A- 0 657 326
- EP-A- 0 934 852
- WO-A-86/07427
- DE-A- 19 508 626
- DE-A- 19 712 955
- DE-U- 29 822 850
- GB-A- 2 004 984
- US-A- 2 815 008
- US-A- 3 893 298
- US-A- 4 091 621
- US-A- 4 412 420
- PATENT ABSTRACTS OF JAPAN vol. 005, no. 025 (M-055), 14. Februar 1981 (1981-02-14) & JP 55 152903 A (NISSAN MOTOR), 28. November 1980 (1980-11-28)

## Beschreibung

Die vorliegende Erfindung betrifft einen pyrotechnischen Aktuator gemäß dem Oberbegriff des Anspruchs 1.

Das US-Patent 4,091,621 zeigt einen pyrotechnischen Aktuator, bei dem ein Sprengstoff elektrisch zündbar ist, wobei das entstehende Gas einen Kolben verstellt. Der Kolben wird durch eine Sicherung daran gehindert, von seiner Endstellung in seine Ausgangsposition zurückzukehren. Die Sicherung erfolgt dabei derart, daß in einer umlaufenden Nut des Kolbens ein c-förmiger Spannring gelagert ist, der im zusammengedrückten, d.h. federbelasteten Zustand mit dem Kolben im Zylinder einliegt. Sobald der Kolben durch das sich entwickelnde Gas aus dem Zylinder herausbewegt hat, kann sich der gespannte, c-förmige Ring entspannen, wodurch sein Radius größer wird als der Innenradius des Zylinders. Auch in entspanntem Zustand bleibt der C-förmige Ring in der Nut des Kolbens. Wird versucht, den Kolben wieder zurück in seine Ausgangsposition zu bewegen, stößt der c-förmige Ring gegen die Stirnseite des Zylinders und verhindert ein Eindringen des Kolbens in den Zylinder.

Nachteilig bei dieser Ausführungsform gemäß dem US-Patent 4,091,621 ist, daß der Kolben lediglich durch einen Reibschluß in seiner Position gehalten wird. Dieser Reibschluß bleibt so lange bestehen, bis der c-förmige Ring den Zylinder verlassen hat. Eine sichere Verankerung des Kolbens in seiner Ausgangsposition ist jedoch über den Reibschluß nicht gewährleistet. Beachtet man weiterhin, daß derartige Systeme für einen langen Zeitraum nicht aktiviert funktionsbereit sein müssen, kann die Sicherung mittels Reibschluß nicht befriedigen. Dies insbesondere deshalb nicht, da nicht gewährleistet ist, ob die Spannung im c-förmigen Ring über mehrere Jahre hin vom Material aufrechterhalten wird. Wird zum Beispiel der pyrotechnische Aktuator in einem Fahrzeug eingesetzt, so muß dieser auch nach 10 bis 20 Jahren noch voll einsatzfähig sein. Dies ist nur gewährleistet, wenn der Kolben stets in seiner Ausgangsposition verbleibt.

Aus der US 4,412,420 ist ebenfalls ein pyrotechnischer Aktuator bekannt, welcher ein Gehäuse aufweist, das einen zylindrischen Hohlraum bildet, in dem ein Kolben verschieblich gelagert ist. Der Kolben ist gegen unerwünschtes Verstellen aus der Ausgangsposition heraus mittels einer Scheibe sowie zweier O-Ringe gesichert. Nach dem Zünden des Aktuators expandiert das entstehende Gas und verstellt den Kolben. Dabei werden die Scheibe sowie ein O-Ring zerstört. Nach Erreichen der Endposition dehnt sich der noch intakte O-Ring aus und hintergreift eine Hinterschneidung, wodurch der Kolben nicht mehr zurück in seiner Ausgangstellung gelangen kann. Auch bei dem Aktuator der US 4,412,420 besteht der Nachteil, dass der O-Ring über Jahre hinweg verformt ist, und nicht sicher gestellt ist, dass er sich nach dem Auslösen noch hinreichend schnell bzw. überhaupt noch ausdehnt und den Kolben in seiner Endstellung sicher hält. Auch ist die Kraft zur Zerstörung der Scheibe und des einen O-Rings nicht genau definierbar bzw. zu bestimmen, wodurch keine definierte Auslösung erfolgen kann.

Aus der US 3,893,298 ist ebenfalls ein pyrotechnischer Aktuator bekannt, bei dem der Kolben in seiner Ausgangsstellung mittels eines Drahtes gesichert ist. Sobald der Aktuator ausgelöst wird, wird der Sicherungsdraht durch Scherung zerstört und der Kolben verstellt. Beim Erreichen der Endstellung werden zwei gegen konische flächen laufende Winkel des Kolbens umgebogen und hintergreifen einen Rücksprung, wodurch der Kolben in seiner Endstellung gehalten wird. Nachteilig hierbei ist, dass die Sicherung des Kolbens in der Ausgangsstellung und Endstellung mittels verschiedener Elemente erfolgt.

Die US 2,815,008, offenbart einen Aktuator, bei dem ein C-Ring in einer außen umlaufenden Nut des Kolbens einliegt und in der Ausgangsstellung von der zylindrischen Innenwandung des Zylinders zusammengedrückt wird. Im Bereich der Endstellung springt die Innenwandung zurück, so dass sich der C-Ring ausdehnen kann und gleichzeitig in der umlaufenden Nut verbleibt, so dass der Kolben in der Endstellung gehalten wird. Auch hier ergibt sich das Problem, dass nicht sicher vorhergesagt werden kann, dass sich der C-Ring nach Jahren der Deformation im Auslösefall überhaupt noch bzw. schnell genug ausdehnt.

Aufgabe der vorliegenden Erfindung ist es daher, einen pyrotechnischen Aktuator bereitzustellen, bei dem der Kolben sicher in seiner Ausgangsstellung gehalten ist.

Diese Aufgabe wird erfindungsgemäß durch einen pyrotechnischen Aktuator mit den Merkmalen des Anspruchs 1 gelöst. Weitere vorteilhafte Ausführungsformen des Erfindungsgegenstandes ergeben sich durch die Merkmale der Unteransprüche.

Durch die Verwendung eines Rastelementes wird der Kolben vorteilhaft in der Ausgangsposition gehalten. Entsprechende Elemente können z.B. federelastische Zungen oder Schnappverbindungen sein. Die Wirkungsweise der Elemente garantiert dabei, daß nur durch Aufbringen einer Mindestkraft auf den Kolben dieser von seiner Ausgangsposition in die Endposition verstellt werden kann. Durch die Verwendung entsprechender Rast- bzw. Rückhalteelemente kann die erforderliche Mindestkraft genau vorgegeben werden. Dies ist ein wesentlicher Vorteil gegenüber dem bekannten Reibschluß, der durch viele Faktoren beeinflußt wird und nur ungenügend berechenbar ist. Zudem ändert sich die erforderliche Mindestkraft zum Verschieben des Kolbens von der Ausgangs- in die Endposition über die Zeit hin nicht, da z.B. eine federelastische Zunge als Rückhalteelement in der Ausgangsposition nicht mittels Kräften belastet ist, sondern lediglich erst dann mit Kräften beaufschlagt wird, wenn der Kolben verstellt wird. Hierdurch wird vorteilhaft eine Materialermüdung vermieden.

Die verwendeten Rast- bzw. Rückhalteelemente dienen vorteilhaft gleichzeitig als Rückhalteelemente, welche den Kolben bei Erreichen der Endposition in dieser halten. Dies bedeutet, daß vorteilhaft keine zusätzlichen Teile vorgesehen sein müssen und somit mit wenigen Teilen die Funktion des Haltens in der Ausgangs- sowie in der Endposition realisierbar ist.

Vorteilhaft können mehrere Rast- bzw. Rückhalteelemente vorgesehen sein, so daß der Kolben nicht erst nach Erreichen der Endposition daran gehindert ist, zur Ausgangsposition zurückzugelangen, sondern auch auf dem Weg von der Ausgangsposition zur Endposition durch die mehreren Rast- bzw. Rückhalteelemente daran gehindert ist, nach Passieren eines der Elemente von dieser Stellung aus zurück in die Ausgangsposition zu gelangen.

Vorteilhaft können sowohl Rast- als auch Rückhalteelemente zusammen die Sicherung des Kolbens gemeinsam übernehmen. Hierbei können sämtliche Sicherungsmittel, welche insbesondere in den in den Figuren dargestellten Ausführungsformen dargestellt sind, in Kombination miteinander verwendet werden.

Vorteilhaft sind die Rast- und/oder Rückhalteelemente an dem Kolben oder an dem Zylinder selbst angeformt oder befestigt. Dabei kann z.B. als Rastelemente bzw. als Rückhalteelement eine Zunge oder eine Bügelfeder Verwendung finden, welche z.B. mit einer sägezahnförmigen Oberflächenstruktur zusammenwirkt oder in entsprechend funktionelle Aussparungen eingreift, so daß sich der Kolben relativ zum Zylinder nur jeweils in eine Richtung nach Überwinden einer Mindestkraft bewegen läßt.

Eine besonders bevorzugte Ausführungsform eines pyrotechnischen Aktuators ergibt sich, wenn der Kolben eine sich in Längsrichtung des Kolbens erstreckende Aussparung aufweist, in die ein am Gehäuse gelagerter Durchgriffsbolzen als Durchgriffsmittel eingreift, wobei die Rast- bzw. Sicherungselemente mit dem am Gehäuse fest gelagerten Stift oder Bolzen zusammenwirken. Der Stift bzw. Bolzen wirkt zusammen mit der Längsaussparung bzw. sich länglich erstreckenden fensterartigen Öffnung als Lager und Führung für den Bolzen. In diesem Fall sind die Rast- bzw. Rückhalteelemente am Kolben selbst angeordnet.

Sofern der Kolben ein Kunststoffspritzteil ist, können die Rast- bzw. Rückhalteelemente mittels eines im Kolben einliegenden Blechteils gebildet werden, wobei das Blechteil z.B. vorteilhaft die Wandung der länglichen Aussparung bzw. fensterartigen Öffnung bildet, so daß der Bolzen sicher durch die längliche Aussparung bzw. fensterartige Öffnung entlanggleiten kann. Durch das Verwenden eines entsprechend gebogenen und gestanzten Metallblechs zur Bildung der Innenwandung sowie der Rast- bzw. Sicherungselemente kann zusätzlich der Kolben verstärkt werden, wodurch größere Kräfte vom Kolben selbst für das Auslösen eines bestimmten Vorgangs aufgebracht werden können.

Durch die vorteilhafte Verwendung einer länglichen Aussparung bzw. fensterartigen Öffnung im Zusammenspiel mit einem Sicherungsstift bzw. -bolzen können die Rast- bzw. Sicherungselemente so gestaltet werden, daß der Stift bzw. Bolzen beim Bewegen des Kolbens von der Ausgangsposition in die Endposition die Rast- bzw. Sicherungselemente verschwenkt oder zur Seite bewegt, wobei nach dem Passieren der Rast- bzw. Sicherungselemente diese zurück in ihre Ausgangsposition bewegt werden, sei es durch eine externe Federkraft oder eine im Element selbst gespeicherte Biegekraft. Das Rast- bzw. Sicherungselement hindert dann formschlüssig den Sicherungsbolzen daran, entgegen der Bewegungsrichtung von der Ausgangsposition in die Endposition im Kolben am Rast- bzw. Sicherungselement vorbei in seine Ausgangsposition zu gelangen.

Ein Formschluß wird insbesondere vorteilhaft dann erzielt, wenn das Rast- bzw. Sicherungselement eine Zunge ist, welche die fensterartige Öffnung vollständig durchgreift, so daß sie, sofern der Bolzen entgegen der Bewegungsrichtung Ausgangs-Endposition mit ihrem freien Ende relativ zum Kolben bewegt wird, vom Bolzen gegen einen Anschlag gedrückt wird. Nur durch Zerstörung des Rast- bzw. Sicherungselements kann nunmehr der Kolben zurück in seine Ausgangsposition bewegt werden. Durch entsprechende Ausgestaltung des Rast- bzw. Sicherungselementes kann jedoch die zur Zerstörung notwendige Kraft derart bemessen werden, daß eine Zerstörung durch von außen wirkende Kräfte auf den Kolben nicht möglich ist.

Vorteilhaft ist der elektrische Zünder samt eventuell notwendigem Sprengstoff direkt im Hohlraum des Gehäuses und damit im Zylinder des pneumatisch wirkenden Zylinders angeordnet. Der elektrische Zünder verfügt über elektrische Zündkontakte, welche durch mindestens eine Öffnung aus dem Hohlraum herausgeführt sind, so daß sie mit einer Zündschaltung verbunden werden können. Das Gehäuse des pyrotechnischen Aktuators ist vorteilhaft derart gestaltet, daß im nicht eingebauten Zustand des pyrotechnischen Aktuators die elektrischen Anschlüsse des Zünders mittels eines Kurzschlußelementes kurzgeschlossen sind. Dieses Kurzschlußelement kann mittels einer Schnappverbindung am Gehäuse befestigt werden, es ist jedoch auch denkbar, daß das Kurzschlußelement direkt bei der Herstellung des insbesondere aus Kunststoff gefertigten Gehäuses mit eingespritzt wird. Sofern das Gehäuse aus einem metallischen Werkstoff ist, können zungenförmige Elemente derart angeformt werden, daß diese beim Einschieben des Zünders in den Hohlraum die elektrischen Kontakte kurzschließen. Unabhängig davon, ob die Kurzschlußelemente angeformt oder zusätzlich montiert worden sind, werden sie beim Anschluß eines elektrischen Verbindungssteckers, welcher den Zünder mit der Zündelektronik verbinden soll, von den elektrischen Anschlüssen des Zünders wegbewegt, so daß der Kurzschluß aufgehoben wird.

Eine ebenfalls bevorzugte Ausführung ergibt sich, wenn am oder im Gehäuse zusätzlich zum Kolben ein verschwenkbar und/oder verschieblich gelagertes Teil angeordnet ist, welches mit dem Kolben in Verbindung ist und beim Bewegen des Kolbens von seiner Anfangs- in seine Endposition verschwenkt und/oder verschoben wird. Durch die Integration eines derartigen verschwenkbaren Teils, welches insbesondere als Wippe oder Hebel ausgebildet ist, kann mit wenigen Bauteilen ein Entriegelungssystem oder Verriegelungssystem realisiert werden, wobei durch die Hebelwirkung beliebige Hebelkräfte oder Verstellwege mit ein und demselben Zylinderkolbensystem erzielbar sind. Ein derartiger pyrotechnischer Aktuator läßt sich z.B. als Entriegelungsmechanismus für herkömmliche Überrollbügelsysteme einsetzen, bei denen bislang elektromagnetische Entriegelungsmechanismen verwendet werden. Der pyrotechnische Aktuator kann mit seinem Zylinderkolbensystem die herkömmlichen Elektromagnete, welche nicht nur in ihrem Eigengewicht schwer, sondern auch in ihrem Aufbau kompliziert und teuer sind, ersetzen. Durch die entsprechende Kapselung des Hohlraums durch den Kolben selbst und die Gehäuseform tritt eine Stichflamme oder bei der Explosion entstehendes Gas aus dem Kolben nicht aus, so daß der pyrotechnische Aktuator sehr leise auslöst und zum anderen brennbare Stoffe, die bei einem Unfall aus dem Kraftfahrzeug austreten können, nicht entzünden kann. Wird bei den herkömmlichen elektromagnetischen Entriegelungssystemen für Überrolbügel bei Kfz der Elektromagnet an einem Gehäuse befestigt, welches den Entriegelungsbügel bzw. -hebel aufnimmt, so kann der Hohlraum ein integraler Bestandteil des Gehäuses sein, wodurch vorteilhaft Teile eingespart und gleichzeitig das System in wenigen Arbeitsschritten gefertigt werden kann.

Der pyrotechnische Aktuator läßt sich vorteilhaft dazu verwenden, einen Überrollbügel eines Kraftfahrzeug auszufahren bzw. zu verstellen. Hierbei kann in einer vorteilhaften Ausführungsform der Überrollbügel mit seinen beiden Enden und in diese eingesetzten Teilen direkt mit dem Hohlraum des Aktuatorgehäuses zusammenwirken, so daß durch die Zündung der Zündkapseln Gas erzeugt wird, welches den Überrollbügel aus seiner Ausgangsposition herausschießt. Bei dieser Konstruktion sollte der Kolben starr mit dem Überrollbügel verbunden sein. Es ist jedoch auch möglich, den Überrollbügel über ein Getriebe vom Kolben anzutreiben. Hierbei ist es möglich, entweder für jedes Ende eines Überrollbügels jeweils einen pyrotechnischen Aktuator einzusetzen. Es ist jedoch auch denkbar, daß jedes Ende eines insbesondere V- oder U-förmigen Überrollbügels mit einem Kolben zusammenwirkt oder diesen selbst bildet, wobei die Kolben in Zylindern einliegen, deren Arbeitsräume über Verbindungsleitungen miteinander in Verbindung sind, wobei in der Verbindungsleitung eine Zündkapsel und ein entsprechender Sprengsatz zur Gasentwicklung angeordnet sind. Sobald die Zündkapsel gezündet wird, entsteht ein Gas in den Zuleitungen, welches die Kolben und mit ihnen den Überrollbügel ohne oder mit Zwischenschaltung eines Getriebes aus der Ausgangsposition in die Endposition verstellt. Durch die explosionsartige Entwicklung der Gasmenge wird der Überrollbügel in wenigen Millisekunden von der Ausgangs- in die Endposition verstellt. Mittels entsprechender Sicherungs- und Rückhaltemechanismen, welche am Überrollbügel selbst angeordnet sein können, wird der Überrollbügel in seiner Endposition sicher gehalten.

Es ist selbstverständlich, daß der pyrotechnische Aktuator je nach Einsatzgebiet größer oder kleiner in seinen Abmessungen ausgestaltet werden kann, so daß der entsprechende Hub des Kolbens oder eine für den Auslösevorgang benötigte Kraft erzielt wird. Es ist ebenso vorstellbar, daß Rast- oder Rückhalteelemente vorgesehen sind, welche am Kolben oder am Zylinder angeformt oder befestigt sind, die bei der Gasentwicklung zerstört insbesondere abgebrochen werden, so daß der Kolben seine Endposition erreichen kann. Der Kolben kann dann durch zusätzliche Rückhalteelemente in seiner Endposition gehalten werden, sobald er diese erreicht hat.

Sofern der pyrotechnische Aktuator derart verwendet wird, daß der Kolben nicht in seiner Endposition festgehalten werden muß, können die entsprechenden Sicherungsmittel zum Halten des Kolbens in seiner Endposition ausgespart werden, wodurch weniger Material und Teile für die Realisierung des pyrotechnischen Aktuators nötig sind.

Es versteht sich von selbst, daß die Form des Zylinders und des Kolbens beliebig wählbar ist. Sofern der Hohlraum mittels eines nachträglichen Bearbeitungsschritts in das Gehäuse eingearbeitet werden muß, ist es konstruktiv besonders einfach, eine kreisförmige Form des Zylinders zu wählen, wodurch der Hohlraum mittels einer Sackbohrung realisierbar ist.

Sofern das Gehäuse aus einem Kunststoff gefertigt ist, kann dieses durch zusätzliche Metallteile gegen äußere mechanische Krafteinwirkung verstärkt werden. Ebenso kann der Kolben durch zusätzliche Verstärkungsteile, welche vorteilhaft ebenfalls die Rast- und/oder Rückhalteelemente bilden, verstärkt sein.

Nachfolgend werden mögliche Ausführungsformen des pyrotechnischen Aktuators anhand von Zeichnungen näher erläutert.

Es zeigen:
- Figur 1:: Eine Querschnittsdarstellung durch den erfindungsgemäßen pyrotechnischen Aktuator;
- Figur 1a:: eine Detailvergrößerung des pyrotechnischen Aktuators gemäß Figur 1;
- Figur 2a - 2c:: einen pyrotechnischen Aktuator mit mehreren Rastelementen;
- Figur 3:: eine perspektivische Ansicht eines Kolbens mit einem Sicherungsstift;
- Figur 4:: eine perspektivische Ansicht eines Kolbens mit zwei fensterartigen Öffnungen und einem U-förmigen Sicherungsstift;
- Figur 5:: eine Vergrößerung der Bodengeometrie des Kolbens zur besseren Abdichtung zwischen Kolben und Zylinder;
- Figur 6:: eine weitere Ausführungsform einer Rasterung, so daß der Kolben sich lediglich von der Ausgangsposition in die Endposition und nicht zurück verstellen kann;
- Figur 7a - 7c:: eine weitere erfindungsgemäße Ausführungsform eines pyrotechnischen Aktuators;
- Figur 8:: ein in ein Funktionsgehäuse integrierter pyrotechnischer Aktuator;
- Figur 9a:: ein Überrollbügelsystem für ein Kraftfahrzeug;
- Figur 9b:: ein im Überrollbügelende integrierter Kolben für den pyrotechnischen Aktuator.

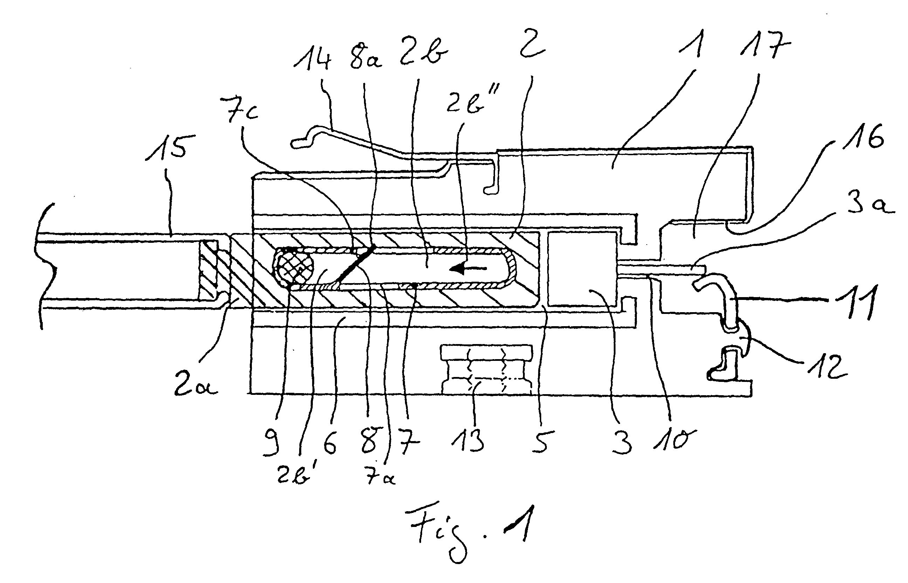

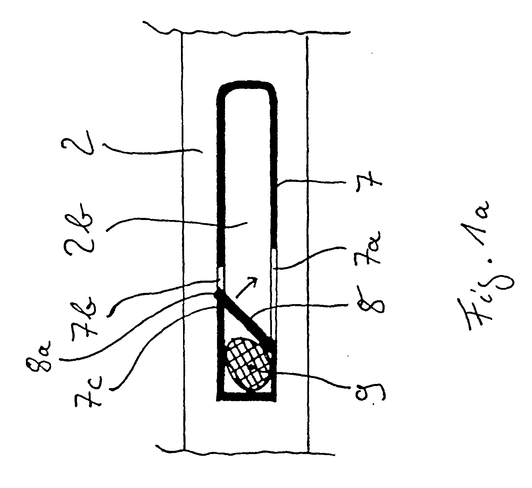

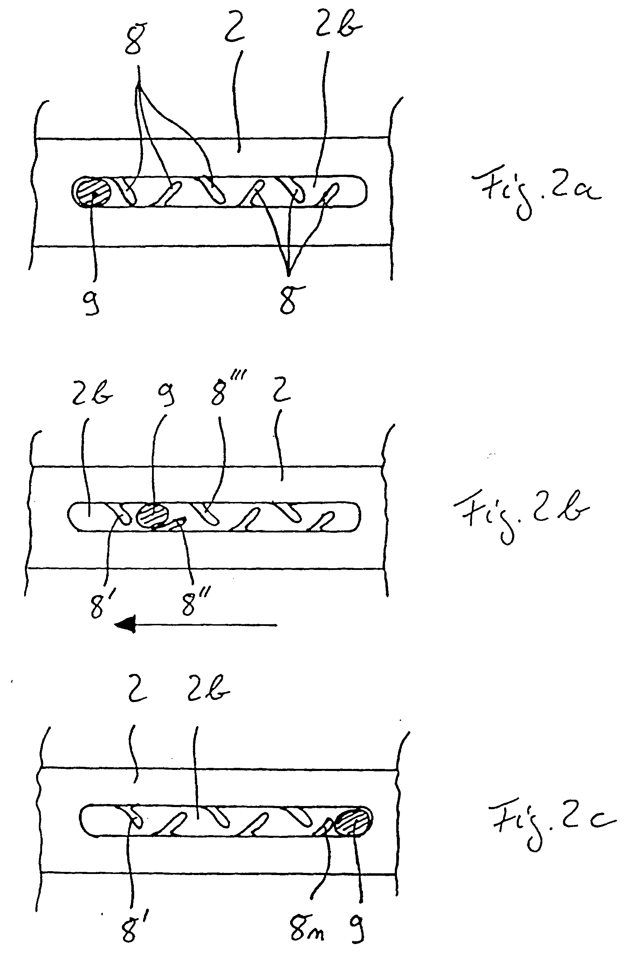

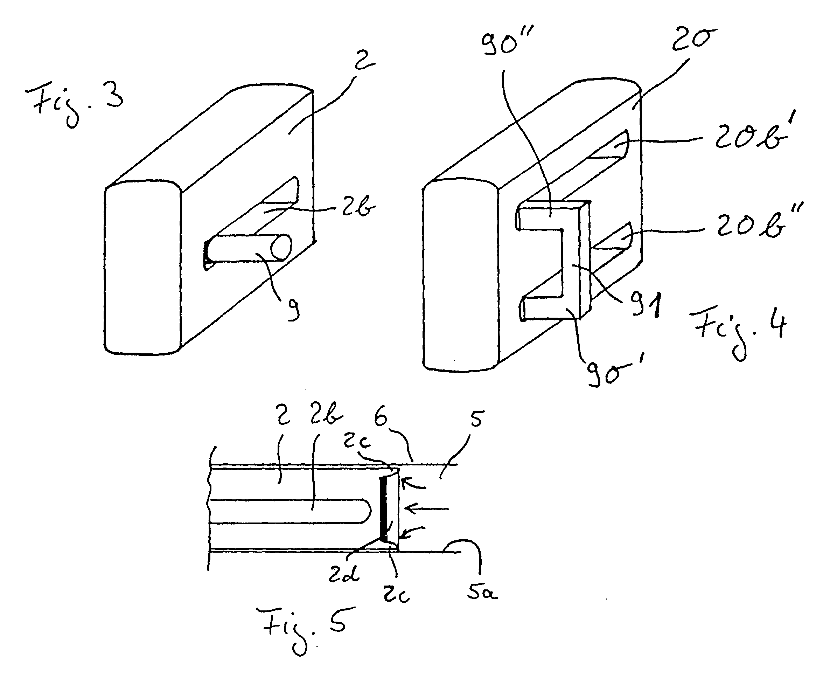

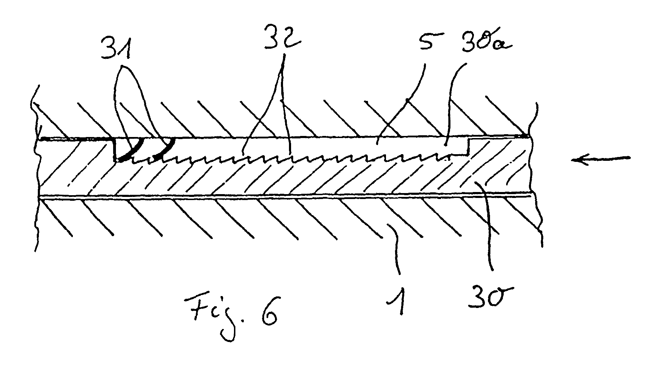

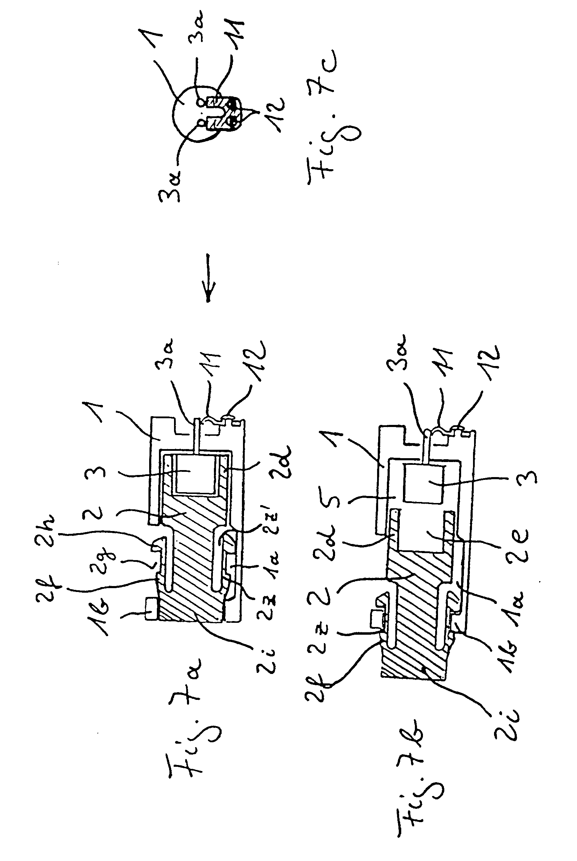

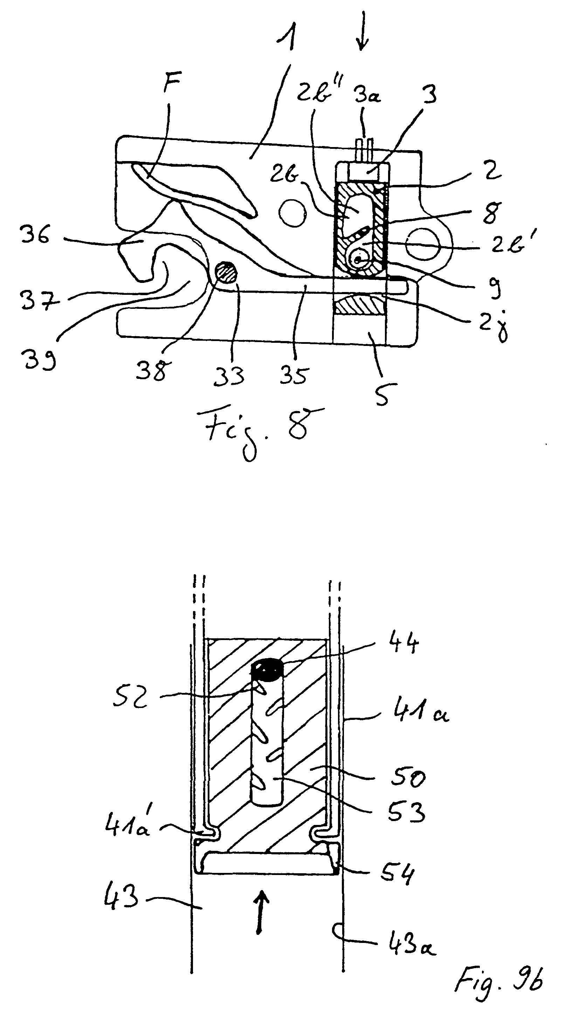

Die Figur 1 zeigt einen pyrotechnischen Aktuator mit einem Gehäuse 1, in dem eine Kolbenlaufbuchse 6 aus bevorzugt korrosionsresistentem metallischem Werkstoff (Dural oder V2A-Stahl) einliegt. In der Kolbenlaufbuchse 6 ist ein gekapselter elektrischer Zünder 3 angeordnet, dessen elektrische Anschlüsse 3a durch eine Öffnung 10 zur Steckerbuchse 17 durchgeführt sind. In der Kolbenlaufbuchse 6 ist der Kolben 2 verschieblich gelagert. An seinem dem Zünder 3 abgewandten Ende 2a des Kolbens 2 ist ein Teil 15 befestigt, mittels dem bestimmte Vorgänge beim Zünden des Zünders 3 ausgelöst werden können. Sobald der Zünder 3 elektrisch gezündet wird, entsteht eine Gasentwicklung, wobei das sich ausbreitende Gas im Kolbenraum 5 den Kolben 2 nach links verschiebt. Damit der Kolben 2 im nicht ausgelösten Zustand nicht aus seiner Ausgangsstellung durch mechanische Stöße oder andere Kräfte herausbewegt werden kann, ist der Kolben mittels eines Stiftes 9 und eines Sicherungselements 8, welches am Kolben befestigt ist, gesichert. Der Stift 9 ist gegenüber dem Gehäuse 1 ortsfest und kann insbesondere an diesem befestigt sein. Soll der Kolben 2 in Pfeilrichtung bewegt werden, so muß eine genügend große Kraft aufgewendet werden, damit der Stift 9 die Zunge 8, wie in Figur la dargestellt, in Pfeilrichtung verschwenken kann, wodurch der Weg vom Bereich 2b' zum Bereich 2b" für den Stift bzw. Bolzen 9 frei wird. Sobald der Stift bzw. Bolzen 9 im Bereich 2b'' angelangt ist, schwenkt die Zunge 8, welche insbesondere aus einem biegeelastischen Material ist, wieder zurück in ihre in Figur la dargestellte Ausgangsposition, wodurch der Weg für den Stift vom Bereich 2b" zum Bereich 2b' versperrt ist. Die Zunge 8 liegt mit ihrem freien Ende 8a an einem Anschlag 7c einer Verriegelungsleiste 7 an und kann nicht weiter entgegen der Pfeilrichtung ohne zerstört zu werden verschwenkt werden. Die Verriegelungsleiste 7 hat hierzu eine Aussparung 7b, in die das freie Ende 8a der Zunge 8 eingreifen kann und deren eine Kante 7c den Anschlag für die Zunge 8 bildet. Sofern die Verriegelungsleiste 7 ein gebogenes Metallblech ist, kann die Zunge 8 teilweise aus dem Blech gestanzt werden, wodurch gleichzeitig die Aussparung 7a entsteht, in die die Zunge 8 durch den Sicherungsstift 9 hineinverschwenkt werden kann, wodurch der Weg vom Bereich 2b' zum Bereich 2b" frei wird. Sofern der Stift 9 die Zunge 8 noch nicht vollständig passiert hat, kann der Bolzen 9 zurück in seine Ausgangsstellung gebracht werden.

In einer nicht dargestellten Ausführungsform ist die Zunge 8 direkt an den Kolben 2 angeformt, wobei auf die Verriegelungsleiste 7 des Aktuators gem. Figur 1 verzichtet werden kann. Die Zunge 8 kann auch ein gesondertes Teil sein, welche in einer entsprechenden Aussparung des Kolbens 2 einliegt.

Das Gehäuse 1 kann mittels Befestigungsmitteln 14 zum Beispiel in einem Kraftfahrzeug eingebaut werden. Im Gehäuse 1 können jedoch auch Gewindebuchsen 13 aus metallischem Werkstoff eingeformt bzw. eingegossen werden, welche zur Montage des pyrotechnischen Aktuators z.B. in einem Kraftfahrzeug dienen.

Damit im nicht eingebauten Zustand der pyrotechnische Aktuator z.B. durch nicht statische Ladung ausgelöst wird, sind die elektrischen Anschlüsse 3a mittels eines elektrischen Kurzschlußelements 11 kurzgeschlossen. Das Kurzschlußelement 11 ist mittels einer Schnappverbindung 12 am Gehäuse 1 befestigbar und insbesondere nur durch Zerstörung der Verbindung 12 wieder vom Gehäuse 1 lösbar. Die Buchse 17 hat ein Innengewinde 16, so daß ein Stecker (nicht dargestellt) in die Buchse 17 einschraubbar ist. Sobald der Stecker in die Buchse 17 eingeschraubt wird, wird das Kurzschlußelement 11 von den elektrischen Anschlüssen 3a wegbewegt, so daß der Kurzschluß aufgehoben ist und der elektrische Zünder über die Bordelektronik gezündet werden kann. Alternativ kann der Stecker auch mittels einer Steck- oder Schnappverbindung am Gehäuse gesichert werden.

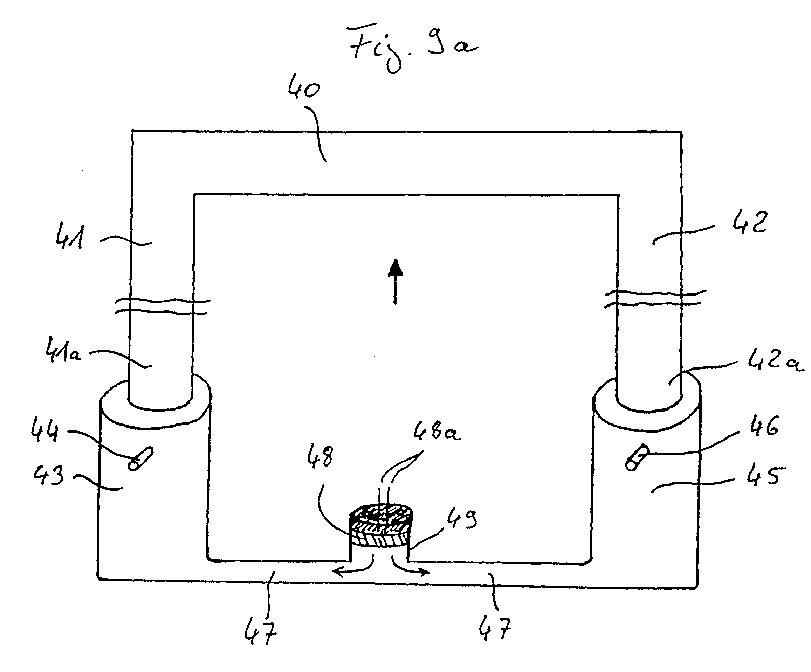

Die Figuren 2a - 2c zeigen eine Buchse mit mehreren Verriegelungselementen 8, so daß beim Bewegen des Kolbens 2 von seiner Ausgangsposition (Figur 2a) in seine Endposition (Figur 2c) der Sicherungsstift 9 mehrere Verriegelungsstufen durchlaufen muß.

Sobald der Kolben in Pfeilrichtung (Figur 2b) verschoben wird, passiert der Sicherungsstift 9 zuerst die Zunge 8'. Sobald er die Zunge 8' vollständig passiert hat, verschwenkt diese in ihre Ausgangsstellung zurück. Anschließend verschwenkt der Sicherungsstift 9 die nächste Zunge 8". Sobald er diese passiert hat, kommt er zur nächsten Sicherungszunge 8'''. Nachdem er die Endstellung erreicht hat, d.h. die letzte Zunge 8n passiert hat, verschwenkt diese ebenfalls wieder in ihre Ausgangsposition und verhindert, daß der Kolben 2 zurück in seine Ausgangsposition (Figur 2a) gelangen kann.

Die Figur 3 zeigt einen Kolben 2 mit einer länglichen Aussparung 2b, wobei sich die Aussparung 2b in Bewegungsrichtung des Kolbens 2 erstreckt. Die Länge der Aussparung 2b ist dabei so bemessen, daß der Sicherungsstift 9, welcher in die Aussparung 2b eingreift, in der Ausgangsposition des Kolbens an der einen Stirnseite der Aussparung 2b anstößt und in der Endposition gegen die andere Stirnseite der Aussparung 2b anstößt. Er dient somit auch als Wegbegrenzer für den Kolben 2. Er kann so gestalten sein, daß er verhindert, daß der Bolzen 2 aus dem Hohlraum vollständig herausgleitet. In der Figur 3 sind aus Gründen der Übersichtlichkeit keine Sicherungselemente wie z.B. die Zunge 8 der Figur 1 eingezeichnet.

Die Figur 4 zeigt eine weitere Ausführungsform eines Kolbens 20, welcher zwei längliche Aussparungen 20b' und 20b" hat. In diese länglichen Aussparungen greift ein Sicherungselement, welches zwei angeformte Stifte bzw. Eingreifelemente 90' und 90" hat, die über den Verbindungssteg 91 miteinander in Verbindung sind. Der Verbindungssteg 91 kann z.B. durch das Gehäuse des pyrotechnischen Aktuators gebildet werden. Auch in Figur 4 sind die Rastelemente bzw. Sicherungselemente aus Gründen der Übersichtlichkeit nicht dargestellt.

Die Figur 5 zeigt einen Ausschnitt des Kolbens 2. Der Kolben 2 ist verschieblich im Kolbenraum 5 gelagert. Sobald die sich entwickelnde Gasmenge den Kolben 2 druckbeaufschlagt, werden die dem Zünder entgegengerichteten Enden 2c, welche die Aussparung 2d bilden, nach außen gegen die Zylinder- bzw. Hohlrauminnenwandung 5a gedrückt, wodurch kein Gas zwischen dem Kolben 2 und der Zylinderwand 5a hindurch entweichen kann. Der Kolben ist somit ohne zusätzliche Dichtungselemente abgedichtet.

Die Figur 6 zeigt eine weitere Ausführungsform, bei der der Kolben 30 in einem Hohlraum 5 eines Gehäuses 1 verschieblich gelagert ist, wobei der Kolben 30 eine Aussparung 30a hat, welche an ihrer einen Seite einen sägezahnförmige Oberflächenkontur 32 hat, die mit federelastischen Zungen 31 zusammenwirkt, so daß ein Verschieben des Kolbens 6 nur in Pfeilrichtung möglich ist. Figur 6 zeigt den Kolben 30 in seiner Ausgangsposition. Sobald der elektrische Zünder gezündet wird, entwickelt sich durch die Explosion ein Gas, durch die der Kolben 30 in Pfeilrichtung bewegt wird. Die dabei entwickelten Kräfte sind groß genug, um die federelastischen Zungen 31 nach oben auszulenken, so daß der Kolben nach links frei bewegbar ist. Damit der Kolben 30 durch die sägezahnförmige Ausgestaltung nicht unnötig im Bereich zwischen der Ausgangsposition und der Endposition gebremst wird, kann im Mittelbereich die Oberfläche ohne Sägezähne ausgestaltet werden. Hierdurch kann der Kolben 30 ungebremst in Richtung seiner Endposition beschleunigt werden. Lediglich im Bereich der Endposition wirken die Zungen 31 mit dem Sägezahnprofil des Kolbens 30 zusammen, so daß der Kolben nach Erreichen der Endposition bzw. kurz vor Erreichen der Endposition nicht wieder zurück in die Ausgangsposition gelangen kann.

Es versteht sich von selbst, daß bei den vorgenannten und auch nachfolgenden Ausführungsformen jeweils die Funktionsweise umgekehrt werden kann. So kann z.B. die sägezahnförmige Ausgestaltung der Oberfläche in der Zylinderinnenwandung des Gehäuses 1 angeordnet sein, wobei dann die federelastischen Zungen am Kolben angeformt oder befestigt sein müssen.

Die Figuren 7a - 7c zeigen eine weitere mögliche Ausführungsform eines pyrotechnischen Aktuators. Dieser pyrotechnische Aktuator verfügt ebenfalls über ein Gehäuse 1, in dessen Hohlraum 5 ein Kolben 2 verschieblich gelagert ist. In dem Hohlraum 5 ist ebenfalls ein die Gasmenge erzeugender Zünder 3 angeordnet, welcher über seine elektrischen Anschlüsse 3a gezündet werden kann. Im nicht eingebauten Zustand des pyrotechnischen Aktuators sind die elektrischen Anschlüsse 3a mittels eines Kurzschlußelementes 11 kurzgeschlossen, so daß eine ungewollte Zündung des Zünders 3 z.B. durch statische Aufladung verhindert wird. Das Kurzschlußelement 11 ist mittels einer Verbindung 12 am Gehäuse 1 angelagert. Der Kolben 2 hat angeformte Wände 2d, welche einen Raum 2e bilden, in dem der Zünder 3 einliegt, sofern sich der Kolben 2 in seiner Ausgangsposition (Figur 7a) befindet. An dem Kolben sind zwei Zungen 2z angeformt, welche zum einen verhindern, daß der Kolben 2 durch mechanische Einflüsse aus seiner Ausgangsposition heraus in seine Endposition (Figur 7b) ungewollt verschoben werden kann und gleichzeitig sicherstellen, daß nach Erreichen der Endposition der Kolben nicht zurück in seine Ausgangsposition gelangen kann. Die Zungen 2z wirken dabei jeweils mit einem Vorsprung 1b des Gehäuses 1 zusammen. Der Bereich 2i des Kolbens, welcher sich in der Ausgangsposition zwischen den beiden Vorsprüngen 1b befindet, ist mit seinem Außenumfang dem Abstand der beiden Vorsprünge 1b zueinander angepaßt. Die Zungen 2z weisen Vorsprünge 2f auf, die sicherstellen, daß nur bei genügend großen Kräften die Zungen 2z nach innen in die Aussparungen 2z' gedrückt werden, so daß die Zungen mit ihren Vorsprüngen 2f vorbei an den beiden Vorsprüngen 1b des Gehäuses 1 bewegt werden können. Sofern eine Gasentwicklung stattfindet, ist der Druck in Pfeilrichtung so groß, daß die Zungen 2z von den Vorsprüngen 1b nach innen verschwenkt werden. Die Zungen 2z weisen jeweils eine Aussparung 2g auf, welche in ihren Abmessung so dimensioniert sind, daß die Vorsprüngen 1b in die Aussparung 2g formschlüssig einpassen. Sobald der Kolben 2 in seine Endstellung (Figur 7b) gebracht worden ist, verschwenken die federelastischen Zungen 2z nach außen, so daß jeweils ein Vorsprung 1b in eine Aussparung 2g einer Zunge 2z zum Einliegen kommt. Die Aussparung 2g wird durch die Vorsprünge 2f und 2h der Zunge 2z gebildet. Es versteht sich von selbst, daß die Zungen in einer weiteren Ausführungsform am Gehäuse und die Vorsprünge am Kolben angeordnet sein können. Dies bedeutet eine Funktionsumkehr des Prinzips, wodurch jedoch die gewünschte Funktion weiterhin erhalten bleibt. Auch können die freien Enden der Zungen am Kolben angeformt sein, so daß die Zungen lediglich eine Ausbuchtung des Kolbens darstellen.

Die Figur 7c zeigt eine Draufsicht auf das Kurzschlußelement 11, welches mit der Schnappverbindung 12 am Gehäuse 1 befestigt ist und die beiden elektrischen Anschlüsse 3a des elektrischen Zünders kurzschließt. Das Kurzschlußelement 11 ist funktionsbedingt aus einem elektrisch leitfähigen und insbesondere korrosionsbeständigen Material.

Die Figur 8 zeigt einen pyrotechnischen Einweg-Aktuator, der in ein Gehäuse 1 integriert ist, wobei zusätzlich im Gehäuse 1 eine Wippe 33 verschwenkbar um einen Bolzen 38 angeordnet ist. Die Wippe 33 durchgreift mit ihrem einen Arm 35 den Kolben 2, welcher hierzu eine fensterartige Öffnung 2j hat. Der Kolben 2 liegt in dem Hohlraum 5 des Gehäuses 1 ein und ist mittels eines Sicherungsbolzens 9 und der am Kolben 2 angeformten Rückhaltezunge 8 in seiner Ausgangsposition sicher gehalten. Sobald der elektrische Zünder 3 über seine elektrischen Anschlüsse 3a gezündet wird, entwickelt sich im Hohlraum 5 ein Gas, welches den Kolben 2 in Pfeilrichtung bewegt. Die Kraft des Gases ist hierbei so groß, daß die Zunge 8 vom Sicherungsbolzen 9, welcher die fensterartige Öffnung 2b des Kolbens 2 durchgreift, verschwenkt, so daß der Sicherungsbolzen vom Bereich 2b' in den Bereich 2b" gelangen kann. Hiernach verschwenkt die Zunge 8 wieder in ihre Ausgangsposition, wodurch der Kolben nicht wieder zurück in seine Ausgangsposition gelangen kann. Während der Kolben 2 in Pfeilrichtung bewegt wird, wird die Wippe entgegen der Federkraft der am Gehäuse 1 angeformten Feder F verschwenkt, so daß die Klinke 36 der Wippe 33 mit ihrer Hinterschneidung 37 ein nicht dargestelltes Teil, welches in der Aussparung 39 des Gehäuses 1 einliegt, freigibt. Durch die Sicherung mittels Bolzen 9 und Zunge 8 könnte auf die Feder F verzichtet werden, sofern die Zunge 8 entsprechend ausgestaltet ist.

Die Figur 9a zeigt eine weitere Ausführungsform zur Verwendung des pyrotechnischen Aktuators für ein Sicherheitssystem, insbesondere einen Überrollbügel eines Kraftfahrzeugs, welcher im Falle eines Unfalls aus einer versteckt angeordneten Position heraus verfahren wird, so daß die Köpfe der Insassen beim Überschlagen des Kraftfahrzeugs geschützt werden. Der Überrollbügel 40 hat zwei Arme 41, 42, welche mit ihren Enden 41a und 42a die Kolben 50 aufnehmen und in Zylindern 43, 45 einliegen. Die Zylinder sind über Verbindungsleitungen 47 mit einem Behältnis 49 verbunden, in dem ein elektrischer Zünder 48 angeordnet ist, welcher über seine elektrischen Anschlüsse 48a zündbar ist. Nach der Zündung entwickelt der Zünder 48 eine Gasmenge, welche die Kolben und mittels dieser den Überrollbügel in Pfeilrichtung bewegt. Der Kolben 50 (Figur 9b) ist mittels einer Schnappverbindung oder einer Bördelung 41a' in die rohrförmigen Enden 41a des Überrollbügels 40 einschiebbar und dort arretierbar. Der Kolben 50 hat angeformte dünne Wände 54, welche durch das Gas gegen die Zylinderwandung 43a gedrückt werden und somit eine Dichtfunktion übernehmen. Der Sicherungsstift 44 durchgreift eine fensterartige Öffnung 53 des Kolbens und des Endes 41a des Überrollbügels 40. Im Kolben 50 sind federelastische Zungen 52 angeordnet, welche mit dem Sicherungsbolzen 44 zusammenwirken, derart, daß der Überrollbügel 40 lediglich in Pfeilrichtung bewegbar ist. Es versteht sich von selbst, daß entsprechende Rasterungsmechanismen nicht nur im Kolben, sondern zusätzlich oder auch als Ersatz außerhalb der Pneumatikzylinder angeordnet werden können. Durch die Integration in den Kolben ergibt sich jedoch eine kostengünstige Ausführungsform, bei der relativ wenig Teile benötigt werden.

Es ist zudem möglich jedem Ende 41a, 42a des Überrollbügels 40 jeweils einen pyrotechnischen Aktuator zuzuordnen, wodurch die Verbindungsleitungen 47 entfallen können.

## Patentansprüche

1. Pyrotechnischer Aktuator, ein Gehäuse (1) umfassend, welches einen Hohlraum (5) aufweist, in dem ein Kolben (2) verschieblich gelagert ist, wobei der Kolben (2) mittels einer bei der Zündung eines Explosivstoffes entstehenden Gasmenge von einer Ausgangsposition in eine Endposition verstellbar ist und der Kolben (2) auf dem Weg zur Endposition oder beim Erreichen der Endposition einen Vorgang auslöst, wobei mindestens ein Rastelement (2z) den Kolben (2) in der Ausgangsposition hält, **dadurch gekennzeichnet, daß** Rastelement (2z) den Kolben (2) bei Erreichen der Endposition in dieser Position formschlüssig hält und verhindert, daß der Kolben (2) zurück in die Ausgangsposition gelangt, wobei das Rastelement eine Zunge (2z) oder eine Bügelfeder ist, die in der Ausgangsposition eine Hinterschneidung (1b) des Hohlraums (5) hintergreift, wobei eine Mindestkraft erforderlich ist, um die Verrastung zu überwinden.

2. Pyrotechnischer Aktuator nach einem der vorherigen Ansprüche, **dadurch gekennzeichnet, daß** das mindestens eine Rastelement (2z) an dem Kolben angeformt ist.

3. Pyrotechnischer Aktuator nach Anspruch 1, **dadurch gekennzeichnet, daß** das Gehäuse (1) mindestens eine Rastnase (1b) aufweist, die mindestens eine Hinterschneidung des Rastelements (2z) oder des Kolbens (2) hintergreift, sofern sich der Kolben (2) im Bereich der Endstellung befindet.

4. Pyrotechnischer Aktuator nach Anspruch 3, **dadurch gekennzeichnet, daß** die Rastnase (1b) am Gehäuse (1) angeformt oder an dem Gehäuse befestigt ist.

5. Pyrotechnischer Aktuator, ein Gehäuse (1) umfassend, welches einen Hohlraum (5) aufweist, in dem ein Kolben (2) verschieblich gelagert ist, wobei der Kolben (2) mittels einer bei der Zündung eines Explosivstoffes entstehenden Gasmenge von einer Ausgangsposition in eine Endposition verstellbar ist und der Kolben (2) auf dem Weg zur Endposition oder beim Erreichen der Endposition einen Vorgang auslöst, wobei mindestens ein Rastelement (8) den Kolben (2) in der Ausgangsposition hält, **dadurch gekennzeichnet, daß** der Kolben (2) eine sich in Längsrichtung des Kolbens (2) erstreckende fensterartige Öffnung oder längliche Aussparung (2b) hat, und daß ein am Gehäuse (1) gelagertes Durchgriffsmittel (9) insbesondere ein Stift oder Bolzen die Öffnung (2b) durchgreift oder in die Aussparung (2b) eingreift, wobei das Rastelement (8) zusammen mit dem Stift oder Bolzen (9) den Kolben (2) in der Ausgangsposition hält.

6. Pyrotechnischer Aktuator nach Anspruch 5, **dadurch gekennzeichnet, daß** das Rastelement oder mindestens ein weiteres Rastelement zusammen mit dem Durchgriffsmittel den Kolben in der Endposition hält, wobei das Rastelement insbesondere eine federelastische Zunge ist.

7. Pyrotechnischer Aktuator nach Anspruch 1, 5 oder 6, **dadurch gekennzeichnet, daß** das Rastelement eine Zunge ist, wobei jede Zunge mit seinem freien Ende entgegen der Bewegungsrichtung von der Endposition in die Ausgangsposition weist.

8. Pyrotechnischer Aktuator nach einem der Ansprüche 5 bis 7, **dadurch gekennzeichnet, daß** das Durchgriffsmittel (9) das Rastelement bzw. die Zunge (2z,8) beim Bewegen des Kolbens (2) in die Endposition verschwenkt bzw. auslenkt.

9. Pyrotechnischer Aktuator nach einem der Ansprüche 5 bis 7, **dadurch gekennzeichnet, daß** das Rastelement (8) die fensterartige Öffnung (2b) für das Durchgriffsmittel (9) versperrt, nachdem der Kolben (2) zumindest die Endposition erreicht hat.

10. Pyrotechnischer Aktuator nach einem der vorherigen Ansprüche 5 bis 9, **dadurch gekennzeichnet, daß** das Durchgriffsmittel (9) das freie Ende (8a) des Rastelementes (8) gegen einen Anschlag (7c) insbesondere gegen die Wandung der fensterartigen Öffnung (2b) drückt, sofern der Kolben (2) in Richtung der Ausgangsposition bewegt wird.

11. Pyrotechnischer Aktuator nach einem der vorherigen Ansprüche 5 bis 10, **dadurch gekennzeichnet, daß** jedes Rastelement (8) nach dem Passieren des Durchgriffsmittels (9) die fensterartige Öffnung (2b) insbesondere formschlüssig für das Durchgriffsmittel (9) versperrt.

12. Pyrotechnischer Aktuator nach einem der vorherigen Ansprüche, **dadurch gekennzeichnet, daß** ein elektrischer Zünder (3) in dem Hohlraum (5) angeordnet ist.

13. Pyrotechnischer Aktuator nach Anspruch 12, **dadurch gekennzeichnet, daß** die elektrischen Anschlüsse (3a) des elektrischen Zünders (3) durch eine Öffnung (10) aus dem Hohlraum (5) herausgeführt sind, und daß ein Kurzschlußelement (11) die Anschlüsse (3a) kurzschließt, wobei der durch das Kurzschlußelement (11) verursachte Kurzschluß beim Einstecken eines Anschlußsteckers, welcher den Zünder (3) mit einer elektronischen Steuerung verbindet, aufgehoben wird.

14. Pyrotechnischer Aktuator nach Anspruch 13, **dadurch gekennzeichnet, daß** das Kurzschlußelement (11) eine Brücke aus leitfähigem Material hat oder ist, welche verschwenk- oder verbiegbar ist und am Gehäuse (1) des Aktuators angelagert ist.

15. Pyrotechnischer Aktuator nach Anspruch 13 oder 8, **dadurch gekennzeichnet, daß** das Kurzschlußelement (11) mittels einer Rast- oder formschlüssigen Verbindung (12) am Gehäuse (1) gelagert ist oder in das Gehäuse (1) während der Herstellung eingeformt wird.

16. Pyrotechnischer Aktuator nach einem der vorherigen Ansprüche, **dadurch gekennzeichnet, daß** der Kolben durch ein insbesondere aus metallischem Werkstoff gefertigten Verstärkungsmittel konstruktiv verstärkt ist, wobei das Verstärkungsmittel den Kolben umgreift oder in diesem eingelagert ist.

17. Pyrotechnischer Aktuator nach Anspruch 15, **dadurch gekennzeichnet, daß** das Verstärkungsmittel das eine oder die mehreren Rastelemente aufweist.

18. Pyrotechnischer Aktuator nach einem der vorherigen Ansprüche, **dadurch gekennzeichnet, daß** der Hohlraum eine Durchgangs- oder Sackbohrung ist, und der Innendurchmesser der Bohrung in einem Abschnitt größer ist als in einem benachbarten Abschnitt, wobei das mindestens eine Rastelement und/oder die federelastische Zunge an dem Kolben angeformt ist, und das Rastelement bzw. die Zunge beim in der Anfangsposition befindlichen Kolben gegen die Wandung des Abschnitts mit dem kleineren Innendurchmesser druckbeaufschlagt ist, und daß beim Bewegen des Kolben in die Endposition das Rastelement bzw. die Zunge bedingt durch die radial nach außen in Richtung Hohlraumwandung wirkende Kraft bei Erreichen des Abschnitts mit dem größeren Innendurchmesser radial nach außen verschwenkt wird und beim Bewegen des Kolbens in Richtung Ausgangsposition das Rastelement bzw. die Zunge gegen den bedingt durch die Durchmesseränderung gebildeten Vorsprung stößt.

19. Pyrotechnischer Aktuator nach einem der vorherigen Ansprüche, **dadurch gekennzeichnet, daß** in dem Gehäuse (1) zusätzlich zum Kolben (2) ein verschwenkbar und/oder verschieblich gelagertes Teil (33) angeordnet ist, welches mit dem Kolben (2) in Verbindung ist und beim Bewegen des Kolbens (2) von seiner Anfangsin seine Endposition verschwenkt und/oder verschoben wird.

20. Pyrotechnischer Aktuator nach Anspruch 19, **dadurch gekennzeichnet, daß** das Teil (33) eine Wippe oder ein Hebel ist, welche/r mit seinem einem Arm (35) in einer Aussparung (2j) des Kolbens (2) einliegt.

21. Verwendung eines pyrotechnischen Aktuators nach einem der vorherigen Ansprüche 1 bis 18, **dadurch gekennzeichnet, daß** ein Überrollbügel (40) eines Fahrzeuges mittels des Aktuators verstellbar ist.

22. Verwendung eines pyrotechnischen Aktuators nach Anspruch 21, **dadurch gekennzeichnet, daß** zwischen dem Überrollbügel (40) und dem Kolben des Aktuators ein Getriebe zwischengeschaltet ist.

23. Verwendung eines pyrotechnischen Aktuators nach Anspruch 21, **dadurch gekennzeichnet, daß** der Überrollbügel (40) starr mit dem Kolben in Verbindung ist.

24. Verwendung eines pyrotechnischen Aktuators nach Anspruch 23, **dadurch gekennzeichnet, daß** ein Teil (41a,42a) des Überrollbügels (40) den Kolben bildet.

25. Verwendung eines pyrotechnischen Aktuators nach Anspruch 24, **dadurch gekennzeichnet, daß** das Teil (41a,42a) an dem Überrollbügel befestigt oder angeformt ist.

26. Verwendung eines pyrotechnischen Aktuators nach einem der vorherigen Ansprüche 21 bis 25, **dadurch gekennzeichnet, daß** jeweils ein Ende (41a,42a) eines insbesondere u- oder v-förmigen Überrollbügels (40) von jeweils mindestens einem Aktuator angetrieben ist.

27. Verwendung eines pyrotechnischen Aktuators nach einem der vorherigen Ansprüche 21 bis 25, **dadurch gekennzeichnet, daß** die Enden (41a,42a) eines u- oder v-förmigen Überrollbügels (40) mit Kolben eines Pneumatik- oder Hydraulikzylinders in Verbindung sind oder die Kolben selbst bilden, wobei die Arbeitsräume der Pneumatik- oder Hydraulikzylinder über Druckleitungen (47) mit einem Arbeitsraum eines weiteren Zylinders in Verbindung sind, wobei dieser Arbeitsraum durch das Verstellen des Kolbens des Aktuators von der Ausgangsposition in die Endposition verkleinert wird, derart, daß ein in den Druckleitungen befindliches Fluid die Kolben der Pneumatik- oder Hydraulikzylinder verstellt, so daß der Überrollbügel im Falle eines Unfalls in seine die Passagiere schützende Stellung verfahren wird.

28. Verwendung eines pyrotechnischen Aktuators nach einem der vorherigen Ansprüche 21 bis 25, **dadurch gekennzeichnet, daß** die Enden (41a,42a) eines u- oder v-förmigen Überrollbügels (40) mit Kolben eines Pneumatik- oder Hydraulikzylinders in Verbindung sind oder die Kolben selbst bilden, wobei die Arbeitsräume der Pneumatik- oder Hydraulikzylinder über Druckleitungen (47) mit einem Raum in Verbindung sind, wobei in diesem Raum eine Gasentwicklung durch Zünden eines Sprengstoffes ausgelöst werden kann, derart, daß über die Druckleitungen (47) das Gas die Kolben der Pneumatik- oder Hydraulikzylinder verstellt, so daß der Überrollbügel im Falle eines Unfalls in seine die Passagiere schützende Stellung verfahren wird.

29. Verwendung eines pyrotechnischen Aktuators nach einem der vorherigen Ansprüche 1 bis 20, **dadurch gekennzeichnet, daß** der Aktuator mindestens ein Sicherungsmittel eines Schließ-, Ver- und/oder Entriegelungssystems verstellt.

30. Verwendung eines pyrotechnischen Aktuators nach Anspruch 29, **dadurch gekennzeichnet, daß** Schließ-, Ver- und/oder Entriegelungssystem eine Brandschutztür oder -tor, eine Fluchttür, eine Fahrzeugtür oder eine Rauchabzugsklappe ist.

31. Verwendung eines pyrotechnischen Aktuators nach Anspruch 29 oder 30, **dadurch gekennzeichnet, daß** der Aktuator Schließ-, Ver- und/oder Entriegelungssystem im Bedarfsfall entriegelt, entsperrt, verriegelt, sperrt, schließt und/oder öffnet.

## Claims

1. Pyrotechnic actuator, encompassing a housing (1) which comprises a hollow space (5) in which a piston (2) is displaceably mounted, wherein the piston (2) can be shifted by means of a gas volume forming upon detonating an explosive from a starting position into an end position, and the piston (2) initiates a process on its way to the end position or upon reaching the end position, wherein at least one detent element (2z) retains the piston (2) in the starting position, **characterised in that** the detent element (2z) positively retains the piston (2) in the end position upon the latter reaching this position and prevents the piston (2) from returning to the starting position, wherein the detent element is a tongue (2z) or a bow-type spring which engages behind an undercut (1b) of the hollow space (5) in the starting position, wherein a minimum force is required in order to overcome the engagement.

2. Pyrotechnic actuator according to any one of the preceding Claims, **characterised in that** the at least one detent element (2z) is formed on the piston.

3. Pyrotechnic actuator according to Claim 1, **characterised in that** the housing (1) comprises at least one detent lug (1b) which engages behind at least one undercut of the detent element (2z) or of the piston (2) if the piston (2) is in the region of the end position.

4. Pyrotechnic actuator according to Claim 3, **characterised in that** the detent lug (1b) is formed on the housing (1) or fastened to the housing.

5. Pyrotechnic actuator, encompassing a housing (1) which comprises a hollow space (5) in which a piston (2) is displaceably mounted, wherein the piston (2) can be shifted by means of a gas volume forming upon detonating an explosive from a starting position into an end position, and the piston (2) initiates a process on its way to the end position or upon reaching the end position, wherein at least one detent element (8) retains the piston (2) in the starting position, **characterised in that** the piston (2) has a window-like opening or elongate recess (2b) which extends in the longitudinal direction of the piston (2), and that a reach-through means (9), in particular a pin or bolt, which is mounted at the housing (1), reaches through the opening (2b) or engages in the recess (2b), wherein the detent element (8), together with the pin or bolt (9), retains the piston (2) in the starting position.

6. Pyrotechnic actuator according to Claim 5, **characterised in that** the detent element or at least one further detent element, together with the reach-through means, retains the piston in the end position, wherein the detent element is in particular a resilient tongue.

7. Pyrotechnic actuator according to Claim 1, 5 or 6, **characterised in that** the detent element is a tongue, wherein each tongue points with its free end contrary to the direction of movement from the end position into the starting position.

8. Pyrotechnic actuator according to any one of Claims 5 to 7, **characterised in that** the reach-through means (9) pivots or deflects the detent element or the tongue (2z, 8) upon the piston (2) moving into the end position.

9. Pyrotechnic actuator according to any one of Claims 5 to 7, **characterised in that** the detent element (8) blocks the window-like opening (2b) for the reach-through means (9) after the piston (2) has reached at least the end position.

10. Pyrotechnic actuator according to any one of the preceding Claims 5 to 9, **characterised in that** the reach-through means (9) presses the free end (8a) of the detent element (8) against a stop (7c), in particular against the wall of the window-like opening (2b), if the piston (2) is moved in the direction of the starting position.

11. Pyrotechnic actuator according to any one of the preceding Claims 5 to 10, **characterised in that** each detent element (8) blocks the window-like opening (2b), in particular positively, for the reach-through means (9) following the passage of the reach-through means (9).

12. Pyrotechnic actuator according to any one of the preceding Claims, **characterised in that** an electric detonator (3) is disposed in the hollow space (5).

13. Pyrotechnic actuator according to Claim 12, **characterised in that** the electrical connections (3a) of the electric detonator (3) are passed through an opening (10) out of the hollow space (5), and that a short-circuiting element (11) short-circuits the connections (3a), wherein the short circuit which is caused by the short-circuiting element (11) is terminated upon plugging in an attachment plug, which connects the detonator (3) to an electronic control unit.

14. Pyrotechnic actuator according to Claim 13, **characterised in that** the short-circuiting element (11) has or is a bridge of conductive material which can pivot or bend and is attached to the housing (1) of the actuator.

15. Pyrotechnic actuator according to Claim 13 or 8, **characterised in that** the short-circuiting element (11) is mounted at the housing (1) by means of a detent or positive connection (12) or is formed into the housing (1) during production.

16. Pyrotechnic actuator according to any one of the preceding Claims, **characterised in that** the piston is structurally reinforced by a reinforcing means which is made in particular of metallic material, wherein the reinforcing means embraces the piston or is embedded in the latter.

17. Pyrotechnic actuator according to Claim 15, **characterised in that** the reinforcing means comprises the one or the plurality of detent element(s).

18. Pyrotechnic actuator according to any one of the preceding Claims, **characterised in that** the hollow space is a through-bore or a blind bore, and the inside diameter of the bore is greater in one portion than in an adjacent portion, wherein the at least one detent element and/or the resilient tongue are/is formed on the piston, and when the piston is in the starting position the detent element or the tongue is pressurised against the wall of the portion with the smaller inside diameter, and that upon the piston moving into the end position, due to the force acting radially outwards in the direction of the hollow space wall, the detent element or the tongue is pivoted radially outwards upon reaching the portion with the greater inside diameter, and upon the piston moving in the direction of the starting position the detent element or the tongue strikes against the projection which is formed due to the change in diameter.

19. Pyrotechnic actuator according to any one of the preceding Claims, **characterised in that**, in addition to the piston (2), a pivotably and/or displaceably mounted part (33) is disposed in the housing (1), which part is connected to the piston (2) and is pivoted and/or displaced upon the piston (2) moving from its starting into its end position.

20. Pyrotechnic actuator according to Claim 19, **characterised in that** the part (33) is a rocker or a lever which lies with one arm (35) in a recess (2j) of the piston (2).

21. Use of a pyrotechnic actuator according to any one of the preceding Claims 1 to 18, **characterised in that** a roll-over bar (40) of a vehicle can be shifted by means of the actuator.

22. Use of a pyrotechnic actuator according to Claim 21, **characterised in that** a gear unit is interconnected between the roll-over bar (40) and the piston of the actuator.

23. Use of a pyrotechnic actuator according to Claim 21, **characterised in that** the roll-over bar (40) is rigidly connected to the piston.

24. Use of a pyrotechnic actuator according to Claim 23, **characterised in that** a part (41a, 42a) of the roll-over bar (40) forms the piston.

25. Use of a pyrotechnic actuator according to Claim 24, **characterised in that** the part (41a, 42a) is fastened to the roll-over bar or formed thereon.

26. Use of a pyrotechnic actuator according to any one of the preceding Claims 21 to 25, **characterised in that** a respective end (41a, 42a) of a roll-over bar (40), which is in particular u- or v-shaped, is driven by at least one respective actuator.

27. Use of a pyrotechnic actuator according to any one of the preceding Claims 21 to 25, **characterised in that** the ends (41a, 42a) of a u- or v-shaped roll-over bar (40) are connected to pistons of a pneumatic or hydraulic cylinder or form the actual pistons, wherein the working chambers of the pneumatic or hydraulic cylinders are connected via pressure lines (47) to a working chamber of a further cylinder, wherein this working chamber is reduced as a result of the piston of the actuator shifting from the starting position into the end position such that a fluid which is contained in the pressure lines shifts the pistons of the pneumatic or hydraulic cylinders, so that in the event of an accident the roll-over bar is moved into its position for protecting the passengers.

28. Use of a pyrotechnic actuator according to any one of the preceding Claims 21 to 25, **characterised in that** the ends (41a, 42a) of a u- or v-shaped roll-over bar (40) are connected to pistons of a pneumatic or hydraulic cylinder or form the actual pistons, wherein the working chambers of the pneumatic or hydraulic cylinders are connected via pressure lines (47) to a chamber, wherein gas can be generated in this chamber by detonating an explosive such that the gas shifts the pistons of the pneumatic or hydraulic cylinders via the pressure lines (47), so that in the event of an accident the roll-over bar is moved into its position for protecting the passengers.

29. Use of a pyrotechnic actuator according to any one of the preceding Claims 1 to 20, **characterised in that** the actuator shifts at least one safety means of a closing, locking and/or unlocking system.

30. Use of a pyrotechnic actuator according to Claim 29, **characterised in that** the closing, locking and/or unlocking system is a fire door or gate, an escape door, a vehicle door or a smoke extraction flap.

31. Use of a pyrotechnic actuator according to Claim 29 or 30, **characterised in that** the actuator unlocks, unblocks, locks, blocks, closes and/or opens a closing, locking and/or unlocking system in case of need.

## Revendications

1. Actionneur pyrotechnique comprenant un boîtier (1) qui comporte un espace creux (5) dans lequel un piston (2) est logé de manière coulissante, le piston (2) étant déplacable à l'aide d'une quantité de gaz générée lors de l'allumage d'une substance explosive entre une position de départ et une position finale et le piston (2) déclenchant un processus pendant le déplacement vers la position finale ou lorsqu'il parvient dans la position finale, dans lequel au moins un élément d'encliquetage maintient le piston (2) dans la position de départ, **caractérisé en ce que** l'élément d'encliquetage (2z) maintient le piston (2) dans la position finale par engagement positif lorsque celui-ci a atteint cette position et empêche le piston (2) de revenir dans la position de départ, l'élément d'encliquetage étant une languette (2z) ou un ressort à étrier qui, dans la position de départ, s'engrène à l'arrière d'une contre-dépouille (1b) de l'espace creux (5), une force minimale étant nécessaire pour surmonter l'encliquetage.

2. Actionneur pyrotechnique selon l'une des revendications précédentes, **caractérisé en ce que** le au moins un élément d'encliquetage (2z) est moulé sur le piston.

3. Actionneur pyrotechnique selon la revendication 1, **caractérisé en ce que** le boîtier (1) comporte au moins un tenon d'encliquetage (1b) qui s'engrène à l'arrière d'au moins une contre-dépouille de l'élément d'encliquetage (2z) ou du piston (2) dans la mesure où le piston (2) se trouve dans la zone de la position finale.

4. Actionneur pyrotechnique selon la revendication 3, **caractérisé en ce que** tenon d'encliquetage (1b) est moulé sur le boîtier (1) ou fixé au boîtier.

5. Actionneur pyrotechnique comprenant un boîtier (1) qui comporte un espace creux (5) dans lequel un piston (2) est logé de manière coulissante, le piston (2) étant déplacable à l'aide d'une quantité de gaz générée lors de l'allumage d'une substance explosive entre une position de départ et une position finale et le piston (2) déclenchant un processus pendant le déplacement vers la position finale ou lorsqu'il parvient dans la position finale, dans lequel au moins un élément d'encliquetage maintient le piston (2) dans la position de départ, **caractérisé en ce que** le piston (2) présente une ouverture semblable à une fenêtre ou un évidement allongé (2b) s'étendant dans le sens longitudinal du piston (2) et **en ce qu'**un élément de prise (9) logé dans le boîtier (1), en particulier une broche ou un boulon, pénètre dans l'ouverture (2b) ou s'engrène dans l'évidement (2b), l'élément d'encliquetage (8), conjointement avec la broche ou le boulon (9), maintenant le piston (2) dans la position de départ.

6. Actionneur pyrotechnique selon la revendication 5, **caractérisé en ce que** l'élément d'encliquetage ou au moins un autre élément d'encliquetage, conjointement avec l'élément de prise, maintient le piston (2) dans la position finale, l'élément d'encliquetage étant en particulier une languette élastique.

7. Actionneur pyrotechnique selon la revendication 1, 5 ou 6, **caractérisé en ce que** l'élément d'encliquetage est une languette, l'extrémité libre de chaque languette étant orientée à l'inverse du sens de déplacement entre la position finale et la position de départ.

8. Actionneur pyrotechnique selon l'une des revendications 5 à 7, **caractérisé en ce que** l'élément de prise (9) fait pivoter ou dévier l'élément d'encliquetage ou la languette (2z, 8) lors du déplacement du piston (2) dans la position finale.

9. Actionneur pyrotechnique selon l'une des revendications 5 à 7, **caractérisé en ce que** l'élément d'encliquetage (8) obture l'ouverture semblable à une fenêtre (2b) vis-à-vis de l'élément de prise (9) après que le piston (2) a atteint au moins la position finale.

10. Actionneur pyrotechnique selon l'une des revendications précédentes 5 à 9, **caractérisé en ce que** l'élément de prise (9) pousse l'extrémité libre (8a) de l'élément d'encliquetage (8) contre une butée (7c), en particulier contre la paroi de l'ouverture semblable à une fenêtre (2b), si le piston (2) se déplace dans la direction de la position de départ.

11. Actionneur pyrotechnique selon l'une des revendications précédentes 5 à 10, **caractérisé en ce que**, après le passage de l'élément de prise (9), chaque élément d'encliquetage (8) obture l'ouverture semblable à une fenêtre (2b) vis-à-vis de l'élément de prise (9), en particulier par engagement positif.

12. Actionneur pyrotechnique selon l'une des revendications précédentes, **caractérisé en ce qu'**un détonateur électrique (3) est disposé dans l'espace creux (5).

13. Actionneur pyrotechnique selon la revendication 12, **caractérisé en ce que** les raccordements électriques (3a) du détonateur électrique (3) sortent de l'espace creux (5) par une ouverture (10) et **en ce qu'**un élément de court-circuit (11) court-circuite les raccordements (3a), le court-circuit généré par l'élément de court-circuit (11) étant supprimé lorsque l'on enfiche une fiche de raccordement qui relie le détonateur (3) à un dispositif de commande électronique.

14. Actionneur pyrotechnique selon la revendication 13, **caractérisé en ce que** l'élément de court-circuit (11) comprend ou est un pont constitué d'un matériau conducteur qui peut être pivoté ou déformé et qui est logé dans le boîtier (1) de l'actionneur.

15. Actionneur pyrotechnique selon la revendication 13 ou 8, **caractérisé en ce que** l'élément de court-circuit (11) est logé dans le boîtier (1) à l'aide d'une liaison à encliquetage ou à engagement positif (12) ou est moulé dans le boîtier (1) pendant la fabrication.

16. Actionneur pyrotechnique selon l'une des revendications précédentes, **caractérisé en ce que** la construction du piston est renforcée par un moyen de renforcement fabriqué dans un matériau en particulier métallique, le moyen de renforcement enveloppant le piston ou étant logé dans celui-ci.

17. Actionneur pyrotechnique selon la revendication 15, **caractérisé en ce que** le moyen de renforcement comporte l'élément d'encliquetage ou les plusieurs éléments d'encliquetage.

18. Actionneur pyrotechnique selon l'une des revendications précédentes, **caractérisé en ce que** l'espace creux est un alésage passant ou borgne et le diamètre intérieur de l'alésage est plus grand dans un tronçon que dans un tronçon adjacent, le au moins un élément d'encliquetage et/ou la languette élastique étant moulé sur le piston et l'élément d'encliquetage ou la languette étant alimenté en pression contre la paroi du tronçon ayant le diamètre intérieur plus petit lorsque le piston se trouve dans la position de départ, et **en ce que**, lorsque le piston se déplace dans la position finale, l'élément d'encliquetage ou la languette pivote radialement vers l'extérieur sous l'effet de la force agissant radialement vers l'extérieur dans la direction de la paroi de l'espace creux lorsque le tronçon ayant le diamètre intérieur plus grand est atteint et, lorsque le piston se déplace dans la direction de la position de départ, l'élément d'encliquetage ou la languette bute contre la partie en saillie formée du fait de la variation du diamètre.

19. Actionneur pyrotechnique selon l'une des revendications précédentes, **caractérisé en ce que**, en plus du piston (2), un élément (33) est logé de manière pivotante et/ou mobile dans le boîtier (1), lequel élément est relié au piston (2) et pivote et/ou se déplace lors du déplacement du piston entre sa position de départ et sa position finale.

20. Actionneur pyrotechnique selon la revendication 19, **caractérisé en ce que** l'élément est (33) un bouton à bascule ou un levier dont le bras (35) est inclus dans un évidement (2j) du piston (2).

21. Utilisation d'un actionneur pyrotechnique selon l'une des revendications précédentes 1 à 18, **caractérisée en ce qu'**un arceau de sécurité (40) d'un véhicule automobile peut être déplacé à l'aide de l'actionneur.

22. Utilisation d'un actionneur pyrotechnique selon la revendication 21, **caractérisée en ce qu'**un engrenage est monté entre l'arceau de sécurité (40) et le piston de l'actionneur.

23. Utilisation d'un actionneur pyrotechnique selon la revendication 21, **caractérisée en ce que** l'arceau de sécurité (40) est relié de manière rigide au piston.

24. Utilisation d'un actionneur pyrotechnique selon la revendication 23, **caractérisée en ce qu'**une partie (41a, 42a) de l'arceau de sécurité (40) forme le piston.

25. Utilisation d'un actionneur pyrotechnique selon la revendication 24, **caractérisée en ce que** la partie (41a, 42a) est fixée ou moulée sur l'arceau de sécurité (40).

26. Utilisation d'un actionneur pyrotechnique selon l'une des revendications précédentes 21 à 25, **caractérisée en ce qu'**une extrémité (41a, 42a) respective d'un arceau de sécurité (40) en particulier en forme de U ou de V est entraînée par au moins un actionneur respectif.

27. Utilisation d'un actionneur pyrotechnique selon l'une des revendications précédentes 21 à 25, **caractérisée en ce que** les extrémités (41a, 42a) d'un arceau de sécurité (40) en forme de U ou de V sont reliées aux pistons d'un cylindre pneumatique ou hydraulique ou forment les pistons eux-mêmes, les espaces de travail des cylindres pneumatiques ou hydrauliques étant en liaison avec un espace de travail d'un autre cylindre par l'intermédiaire de conduites de refoulement (47), cet espace de travail étant diminué par le déplacement du piston de l'actionneur entre la position de départ et la position finale de manière à ce qu'un fluide se trouvant dans les conduites de refoulement déplace les pistons des cylindres pneumatiques ou hydrauliques afin que, en cas d'accident, l'arceau de sécurité soit déplacé dans sa position de protection des passagers.

28. Utilisation d'un actionneur pyrotechnique selon l'une des revendications précédentes 21 à 25, **caractérisée en ce que** les extrémités (41a, 42a) d'un arceau de sécurité (40) en forme de U ou de V sont reliées aux pistons d'un cylindre pneumatique ou hydraulique ou forment les pistons eux-mêmes, les espaces de travail des cylindres pneumatiques ou hydrauliques étant en liaison avec un espace par l'intermédiaire de conduites de refoulement (47), un dégagement de gaz pouvant être déclenché dans cet espace par l'allumage d'une substance explosive de manière à ce que, par l'intermédiaire des conduites de refoulement (47), le gaz déplace les pistons des cylindres pneumatiques ou hydrauliques, de sorte que, en cas d'accident, l'arceau de sécurité est déplacé dans sa position de protection des passagers.

29. Utilisation d'un actionneur pyrotechnique selon l'une des revendications précédentes 1 à 20, **caractérisée en ce que** l'actionneur déplace au moins un moyen d'arrêt d'un système de fermeture, de verrouillage et/ou de déverrouillage.

30. Utilisation d'un actionneur pyrotechnique selon la revendication 29, **caractérisée en ce que** le système de fermeture, de verrouillage et/ou de déverrouillage est une porte ou un portail coupe-feu, une porte de secours, une porte de véhicule automobile ou une trappe d'extraction de fumée.

31. Utilisation d'un actionneur pyrotechnique selon la revendication 29 ou 30, **caractérisée en ce que**, en cas de besoin, l'actionneur déverrouille, débloque, verrouille, bloque, ferme et/ou ouvre le système de fermeture, de verrouillage et/ou de déverrouillage.
